# EUROPEAN PATENT SPECIFICATION

(11) **EP 3 628 172 B1**
(45) Date of publication and mention of the grant of the patent: **27.01.2021**
(21) Application number: 19200020.6
(22) Date of filing: 27.09.2019
(51) Int. Cl.: A23L 7/109

(54) **STUFFED PASTA FOOD ITEM, APPARATUS AND METHOD TO PRODUCE SAID FOOD ITEM**
GEFÜLLTES TEIGWARENLEBENSMITTEL, VORRICHTUNG UND VERFAHREN ZUR HERSTELLUNG DES LEBENSMITTELS
PRODUIT ALIMENTAIRE À BASE DE PÂTES FARCIES, APPAREIL ET PROCÉDÉ DE PRODUCTION DUDIT PRODUIT ALIMENTAIRE

(30) Priority: 27.09.2018 IT 201800008968
(43) Date of publication of application: 01.04.2020
(73) Proprietor: Pastificio Rana S.p.A., 37057 San Giovanni Lupatoto (Verona) (IT)
(72) Inventor: Rana, Gian Luca, 37057 San Giovanni Lupatoto (IT)
(74) Representative: Eccetto, Mauro

(56) References cited:
- EP-A1- 0 307 614
- US-A- 5 660 102
- US-A- 6 099 885
- US-B1- 7 943 188

## Description

### CROSS-REFERENCE TO RELATED APPLICATIONS

This patent application claims priority from Italian patent application no. 102018000008968 filed on September 27, 2018.

### TECHNICAL FIELD

The invention relates to a stuffed pasta food item.

### STATE OF THE ART

Stuffed pasta food items (such as, for example, ravioli or the like) are part of the tradition of different culinary cultures and are known in different shapes and formats; nowadays they can be both home-made and be produced with industrial production lines.

Documents US 6,099,885, US 7,943,188, EP 307,614 and US 5,660,102 disclose food items and/or apparatuses for manufacturing the above-identified food items.

The industrial production of stuffed pasta food items involves continuously feeding at least one continuous sheet of pastry with an adjusted thickness and a predefined width; distributing doses of stuffing on the continuous sheet; covering the area of the sheet on which the stuffing doses lie either with the same sheet or with another sheet with an adjusted thickness; feeding the sheet or the sheets with interposed stuffing doses between a shaping mould and a counter-mould, which are preferably mounted on opposite rollers, so as to give the shape of a specific food item. Subsequently, the edges of the food item are cut in order to separate the food item from the sheet or from the sheets.

The process described above has proved to be especially suited to manufacture stuffed pasta food items with an ideal quality and a good appearance.

However, the subsequent operations of the manufacturing process, such as, for example, transportation, pasteurization and dehumidification, cause the stuffed pasta food items to be subjected to physical and mechanical stresses of different nature, which can jeopardize the shape of the food items and, in case of large-sized food items, the integrity of the food items themselves.

As a consequence, current manufacturing processes for the production of stuffed pasta food items put a brake on the introduction of large-sized stuffed pasta food items.

### SUBJECT-MATTER OF THE INVENTION

An object of the invention is to provide a stuffed pasta food item (more precisely, ravioli or the like), which is not affected by the drawbacks of the prior art.

According to the invention, there is provided a stuffed pasta food item, the food item comprising:
- a stuffing dose comprising at least one of the following ingredients: meat, vegetables, fish, eggs, cheese, mushrooms;
- a wrap provided with at least one sheet obtained from a dough comprising at least flour and at least one component containing water; the wrap comprising:
   - two side flaps joined to one another;
   - two central portions, at least one of which is rounded so as to define a housing for the stuffing dose; and
   - at least one rib, which extends along at least one portion of the rounded central portion.

The wrap (the sheet) comprises (is made of) pastry, more in particular fresh pastry.

More precisely, the wrap has a humidity content of at least 23% (in particular, at least 24%) by weight relative to the total weight of the wrap. In particular, the wrap has a humidity content up to 30% (more in particular, up to 27%) by weight relative to the total weight of the wrap.

According to some embodiments, the dough comprises (is obtained by mixing) flour, a component containing water (for example, water and/or eggs) and, if necessary, salt.

In some specific cases, the component comprising water is eggs (in other words, the dough comprises eggs). In addition or alternatively, the component comprising water is water (in other words, the dough comprises water).

Thanks to the invention, the central rounded portion is reinforced, as it is the weakest part of the wrap due to the stretching and consequent thinning thereof during the deformation step.

Thanks to the presence of the stiffening rib, the manufacturing process does not need significant changes.

In particular, the rib consists of two wrap portions facing one another and which form a fold between one another.

The creation of a fold leads to the presence of a reinforcement at the apex of the fold. Furthermore, the wrap portions are substantially in contact with one another in the area of the apex and, therefore, create a reinforcement.

In particular, said wrap portions form a fold defining an acute angle.

The acute angle helps reinforce the area of the apex of the fold (and, if necessary, place the wrap portions forming the fold in contact with one another).

In particular, each wrap portion forms a further fold with the remaining part of the central portion.

The further folds help increase the stiffness of the wrap and of the rounded central portion.

In particular, said rib is adjacent to one of the most resistant and stiffest portion of the entire food item because the overlapping flaps define an area with a thickness that is substantially twice the thickness of the remaining parts of the wrap. The fact that the rib is adjacent to one of the flaps helps define a sort of support frame consisting of the flaps and the ribs.

According to an embodiment of the invention, the wrap comprises two sheets, which are joined to one another along respective flaps, which define the entire perimeter of the food item.

According to alternative embodiments, the wrap comprises on single sheet folded onto itself and having overlapping flaps, which are joined so as to define a portion of the perimeter of the food item. In these cases, a further portion of the perimeter of the food item is defined by the folding (which partially wraps the stuffing doe) of the sheet.

A further object of the invention is to provide an apparatus to produce a stuffed pasta food item, which is not affected by the drawbacks of the prior art.

According to the invention, there is provided an apparatus to produce a stuffed pasta food item of the type described above, the apparatus comprising a shaping mould comprising a face; and an opening in the face configured to house the rounded central portion, wherein the opening is laterally delimited by inclined faces and by cuts, which extend from the face along at least part of the inclined faces and are configured to shape the ribs.

According to the invention, there is provided an apparatus to produce a stuffed pasta food item of the type described above, the apparatus comprising a shaping mould comprising a face; and an opening in the face configured to house the rounded central portion.

The rounded central portion basically gets into the opening due to the thrust exerted by the stuffing dose.

In particular, the face of the shaping mould has a protruding part, which is adjacent to the opening and is configured to exert a pressure upon the flaps (in particular, upon the entire surface of the flaps), so that the flaps adhere to one another. According to some embodiments, the protruding part has the shape of the flaps of the food item.

Simultaneously with the shaping of the rounded central portions, the flaps are sealed so as to avoid leaks of the stuffing dose.

In particular, the opening of the shaping mould is laterally delimited by inclined faces and cuts, which extend from the aforesaid face (more in particular, from the protruding part) along (at least part of) the inclined faces and are configured to form (and house) the ribs.

The ribs are manufactured thanks to the cuts. During the food item shaping step, the sheets can easily be deformed in a plastic manner.

In particular, the inclined faces converge as the depth of the opening of the shaping mould increases, whereas the depth of the cuts decreases as the depth of the opening increases.

Thanks to this configuration, each rib has a greater size close to the flaps and progressively reduces its size (until it disappears). Indeed, the area of the rounded central portion subjected to the greatest stretching has not ribs.

A further object of the invention is to provide a method for the production of a stuffed pasta food item, which is not affected by the drawbacks of known methods.

According to the invention, there is provided a method to produce a food item as identified above, the method comprising the steps of:
- providing a stuffing dose comprising at least one of the following ingredients: meat, vegetables, fish, eggs, cheese, mushrooms;
- wrapping the stuffing dose with a wrap provided with at least one sheet obtained from a dough comprising at least flour and a component containing water;
- joining two side flaps of the wrap to one another;
- shaping two central portions, at least one of which is rounded so as to define a housing for the stuffing dose; and
- shaping at least one rib, which extends along at least one portion of the rounded central portion.

### BRIEF DESCRIPTION OF THE FIGURES

Further features and advantages of the invention will be best understood upon perusal of the following description of a non-limiting embodiment thereof, with reference to the accompanying drawing, wherein:
- Figure 1 is a plan view of a stuffed pasta food item manufactured according to the invention;
- Figure 2 is a cross section view of the food item of Figure 1 along cross section lines II-II;
- Figure 3 is a cross section view of the food item of Figure 2 along cross section lines III-III;
- Figure 4 is a perspective view, with parts removed for greater clarity, of a shaping mould used to manufacture the food item of Figure 1;
- Figure 5 is a perspective view, with parts removed for greater clarity, of a cutting mould used to manufacture the food item of Figure 1; and
- Figure 6 is a schematic view, with parts removed for greater clarity, of a production line to produce the food item of Figure 1.

### PREFERRED EMBODIMENT OF THE INVENTION

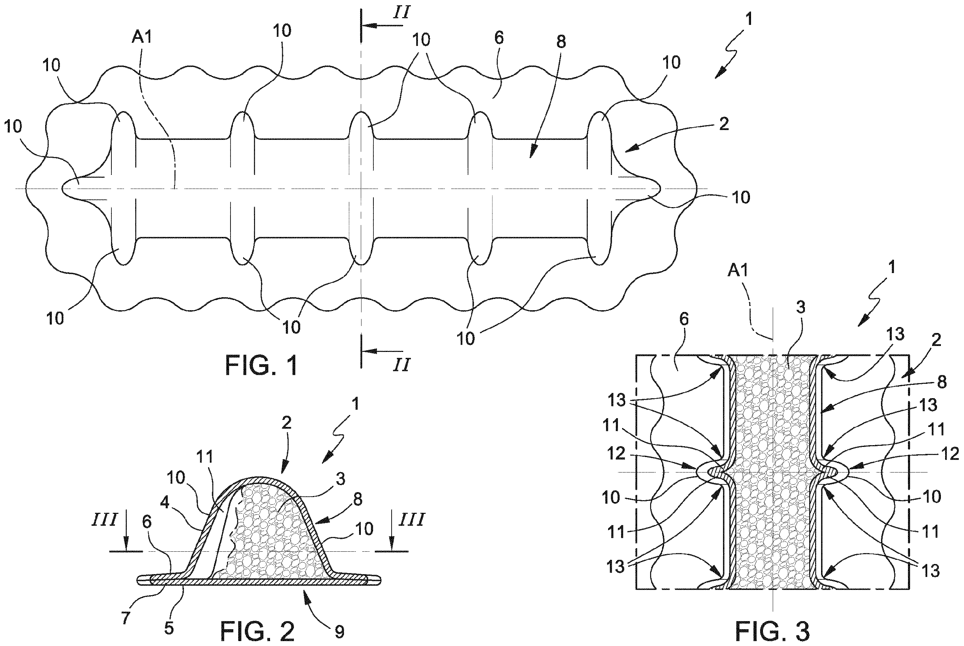

Figures 1 and 3 show a stuffed past food item 1 comprising a wrap 2; and a stuffing dose 3 comprising at least one of the following base ingredients: meat, fish, vegetables, eggs, cheese, and mushrooms.

In particular, the food item 1 is ravioli (or the like).

In the case shown in Figure 1, the food item 1 has an oblong shape and extends along a longitudinal axis A1.

Generally speaking, the wrap 2 comprises one or two sheets 4 and 5 obtained through rolling of a dough comprising flour, salt and a component containing water (for example, water and/or eggs).

According to some embodiments, each one of the sheets 4 and 5 has thickness up to approximately 2 mm (more precisely, up to approximately 1.4 mm; in particular, equal to at least 0.4 mm), more precisely, usually around 1 mm.

In particular, the wrap 2 is made of pastry, more in particular fresh pastry.

According to some embodiments, the food item 1 has a length of at least 4 cm, in particular of at least 7 cm, more in particular of at least 9 cm (more precisely, up to 20 cm). In addition or alternatively, the food item 1 has a width of at least 2 cm, in particular of at least 4 cm, more in particular of at least 7 cm (more precisely, up to 20 cm).

More precisely, each rib 10 has a width (crosswise to the fold) ranging from 0.5 mm to 4 mm. In addition or alternatively, each rib has a length (substantially parallel to the fold) ranging from 0.5 mm to 20 mm.

In the case shown herein, the wrap 2 comprises two sheets 4 and 5, which have respective flaps 6 and 7 facing one another and joined to one another; and respective central portions 8 and 9, which face one another and are spaced apart from one another so as to define a housing for the stuffing dose 3.

The composition of the sheets 4 and 5 (in particular, made of pastry; more in particular, made of fresh pastry) allows the flaps 6 and 7 to be caused to adhere to one another through gluing by applying a light pressure on the flaps 6 and 7.

In particular, the wrap 2 is made of pastry, more in particular fresh pastry.

According to some embodiments, the wrap 2 has a humidity content of at least 23% (in particular, at least 24%) by weight (relative to the total weight of the wrap). In particular, the wrap 2 has a humidity content up to 30% (more in particular, up to 27%) by weight (relative to the total weight of the wrap).

More precisely, the sheet 4 (and/or the sheet 5) has a humidity content of at least 23% (in particular, at least 24%) by weight (relative to the total weight of the sheet 4 - and/or of the sheet 5). In particular, the sheet 4 (and/or the sheet 5) has a humidity content up to 30% (more in particular, up to 27%) by weight (relative to the total weight of the sheet 4 - and/or of the sheet 5)

The expression "stuffing dose" 3 defines a discrete portion of stuffing comprising one or more of the aforesaid ingredients, which are cut into small pieces or chopped and mixed together. The stuffing dose 3 is characterized in that it has cohesion forces which allow the stuffing dose 3 to gain a shape that remains stable for an amount of time of some seconds.

According to some embodiments, the stuffing dose 3 has a weight of at least 3 grams (in particular, at least 10 grams). More in particular, the stuffing dose 3 has a weight up to 150 grams.

The wrap 2 comprises ribs 10, which fulfil the function of stiffening the wrap 2 in the area of the central portion 8, which is rounded unlike the central portion 9, which is flat and substantially defines a support surface of the food item 1.

According to a variant which is not shown herein, the central portion 9 (in addition to the central portion 8) is rounded and has ribs 10, as well.

The food item 1 has a greater stiffness along the joined flaps 6 and 7 because, along said flaps 6 and 7, it has a thickness that substantially is twice the thickness of the central portions 8 and 9.

The rounded central portion 8 substantially is deep-drawn and has a thickness that is slightly smaller than the initial thickness of the sheet 4 following a stretching of the sheet 4 itself.

Each rib 10 originates from the flaps 6 and 7, extends towards the centre of the food item 1 and consists of two wrap portions 11 of the central portion 8, which face one another, form a fold 12 between one another and form respective folds 13 with the remaining part of the central portion 8.

With reference to Figure 1, the ribs 10 are distributed in a relatively uniform manner along the wrap 2.

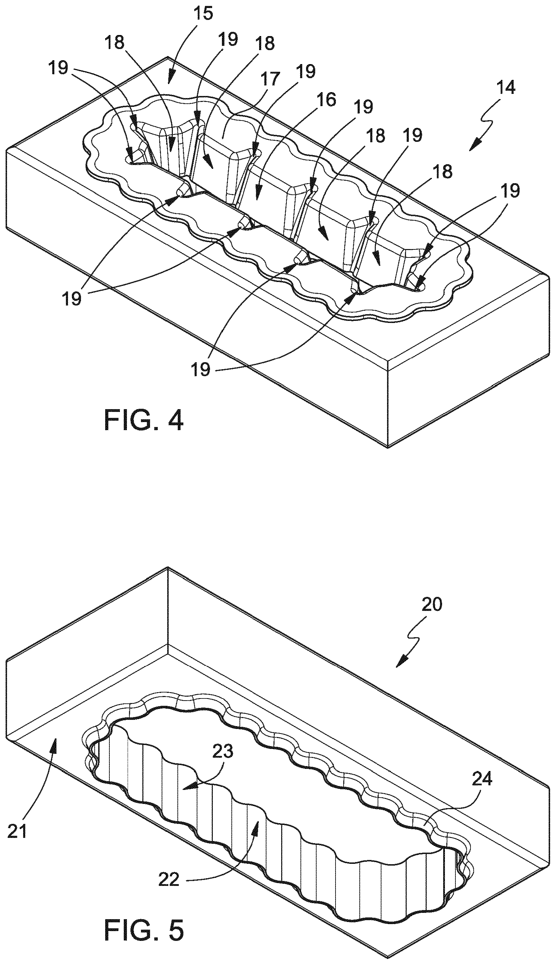

Figure 4 shows a shaping mould 14 to give the shape of the food item 1 of Figure 1. The shaping mould 14 comprises a polymer material body having a face 15, where an opening 16 is obtained, which, in this case, is defined by a slit. Alternatively, the oblong opening 16 could be defined by a groove.

The face 15 has a protruding part 17, which is adjacent to the opening 16 (having the shape of the flaps 6 and 7 of the food item 1) and is configured to exert the pressure needed for the adhesion of the flaps 6 and 7. The oblong opening 16 is laterally delimited by inclined faces 18 and by cuts 19, which extend from the opening 16 to the inclined faces 18. The inclined faces 18 converge as the depth of the opening 16 (starting from the face 15) increases, whereas the depth of the cuts 19 decreases as the depth of the opening 16 (starting from the face 15) increases.

In use, the shaping mould 14 is used to shape the food item 1 by compressing the wrap 2 against a striker element or counter-mould, which, in this case, is simply defined by a flat or cylindrical surface, so as to cause the flaps 6 and 7 to adhere to one another, whereas the cuts 19 help shape and house the ribs 10. With reference to figure 1, the wrap 2 has a large content of water and, for this reason, has a very high plastic deformability; hence, the central portion 8 assumes the shape of the mould 14 along the walls 18 and the cuts 19 (Figure 4).

Figure 5 shows a cutting mould 20 to cut out the edge of the flaps 6 and 7. The cutting mould 20 comprises a polymer material body having a face 21 where an opening 22 is obtained, which is (internally) delimited by a side face 23, so as to house the rounded central part 8 of the food item 1 (Figure 1), and has a thin wall 24 with a corrugated profile, which extends at right angles relative to the face 21 and is coplanar to the side face 23.

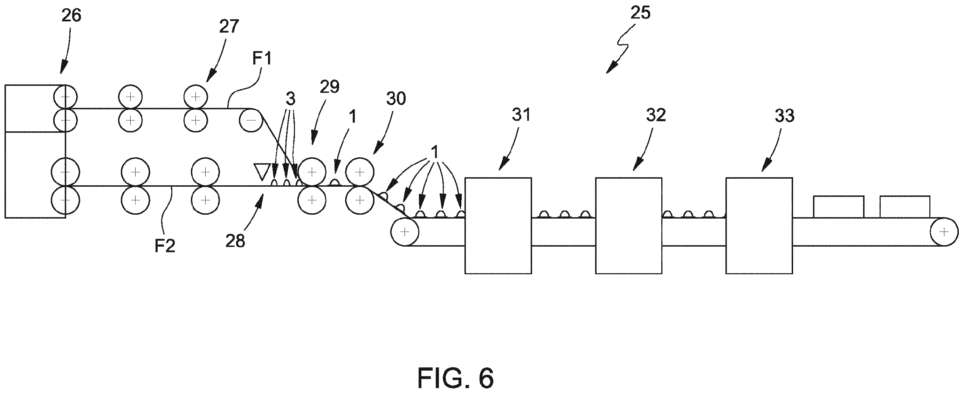

With reference to Figure 6, number 25 indicates a production line to mass-produce food items 1.

The production line 25 comprises a dough station 26, where a dough is prepared and blended, said dough being used to obtain two continuous sheets F1 and F2 from which the sheets 4 and 5 are obtained. The continuous sheets F1 and F2 are sized in width and adjusted in thickness in a rolling station 27. In a feeding station 28, stuffing doses 3 are placed on the continuous sheet F2.

Alternatively, the stuffing doses 3 are inserted between the two continuous sheets F1 and F2 while they are being placed on top of one another.

Each stuffing dose 3 is enclosed between the two continuous sheets F1 and F2 in a shaping station 29, which comprises two rollers facing one another, wherein the upper roller is equipped with a plurality of moulds 14 (Figure 4), each shaping, in contact with the lower roller, a respective food item 1 and compressing the flaps 6 and 7 of each food item 1 so as to cause the flaps 6, 7 to adhere.

Subsequently, the food items 1 are detached from the remaining part of the continuous sheets F1 and F2 in a cutting station 30, which comprises an upper roller equipped with a plurality of cutting moulds 20 (Figure 5), each cutting the food items 1.

The food items 1 are subsequently fed through a pasteurization station 31, a dehumidification station 32 and a packing station 33 by means of a belt conveyor or other similar devices.

The transportation causes the food items 1 to be subjected to significant mechanical stresses, which substantially depend on the total weight thereof.

In the pasteurization station 31, the food items 1 are subjected to high-temperature steam, whereas, in the dehumidification station, the food items 1 are subjected to the removal of water, which can cause a different shrinking between the stuffing dose 3 and the wrap 2 (Figure 1). In this specific case and with reference to Figure 1, the ribs 10 prevent the central portion 8 from deforming due to the aforesaid stresses.

Indeed, despite the numerous stresses to which the food items 1 are subjected, the Applicant surprisingly found out that the food items 1 provided with ribs 10, even the large-sized ones, can stand the physical and mechanical stresses to which they are subjected over the course of the manufacturing process.

For example, experiments have shown that the food item 1 of Figure 1 manufactured with relatively large sizes (with a total weight of 23.5 g, a length of 110 mm, a width of 40 mm, and a percentage by weight of the stuffing dose 3 exceeding 40%, in particular exceeding 50% relative to the total weight of the food item) has proved to have a good resistance to mechanical transportation stresses and a good stiffness of the rounded central portion 8.

## Claims

1. A stuffed pasta food item, the food item (1) comprising:
- a stuffing dose (3) comprising at least one of the following ingredients: meat, vegetables, fish, eggs, cheese, mushrooms;
- a wrap (2) provided with at least one sheet (4, 5) obtained from a dough comprising at least flour and at least one component containing water; the wrap (2) comprising:
- two side flaps (6, 7) joined to one another;
- two central portions (8, 9), at least one of which is rounded so as to define a housing for the stuffing dose (3); and
- at least one rib (10), which extends along at least one portion of the rounded central portion (8).

2. The food item according to claim 1, wherein the rib (10) consists of two wrap portions (11) facing one another and which form a fold (12) between one another.

3. The food item according to claim 2, wherein said wrap portions (11) form a fold (12) defining an acute angle.

4. The food item according to claim 2 or 3, wherein each wrap portion (11) forms a further fold (13) with the remaining part of the central portion (8).

5. The food item according to any one of the preceding claims, wherein said rib (10) is adjacent to one of the side flaps (6, 7).

6. The food item according to any one of the preceding claims, wherein the wrap (2) comprises two sheets (4, 5) joined to one another along respective side flaps (6, 7), which define the entire perimeter of the food item (1).

7. The food item according to any one of the preceding claims, wherein the wrap (2) comprises a plurality of ribs (10).

8. An apparatus to produce a stuffed pasta food item according to any one of the preceding claims, the apparatus comprising a shaping mould (14) comprising a face (15); and an opening (16) in the face (15) configured to house the rounded central portion (8), wherein the opening (16) is laterally delimited by inclined faces (18) and by cuts (19), which extend from the face (15) along at least part of the inclined faces (18) and are configured to shape the ribs (10).

9. The apparatus according to claim 8, wherein the face (15) has a protruding part (17), adjacent to the opening (16), which is configured to exert a pressure when the side flaps (6, 7) are caused to adhere, so that the side flaps adhere to one another.

10. The apparatus according to claim 8 or 9, wherein the inclined faces (18) converge as the depth of the opening (16) increases; the depth of the cuts (19) decreases as the depth of the opening (16) increases.

11. A method of producing a food item according to any one of the claims from 1 to 7, the method comprising the steps of:
- providing a stuffing dose (3) comprising at least one of the following ingredients: meat, vegetables, fish, eggs, cheese, mushrooms;
- wrapping the stuffing dose with a wrap (2) provided with at least one sheet (4, 5) obtained from a dough comprising at least flour and at least one component containing water;
- joining two side flaps (6, 7) of the wrap (2) to one another;
- shaping at least one rounded central portion (8) so as to define a housing for the stuffing dose (3); and
- shaping at least one rib (10), which extends along at least one portion of the rounded central portion (8).

12. The method according to claim 11, wherein the steps of joining the side flaps (6, 7) and shaping the rounded central portion (8) and the rib (10) are carried out substantially simultaneously by means of a shaping mould (14).

## Patentansprüche

1. Ein gefüllter Teigwaren-Lebensmittelartikel, wobei der Lebensmittelartikel (1) umfasst:
- eine Füllungsdosis (3), die mindestens eine der folgenden Zutaten umfasst: Fleisch, Gemüse, Fisch, Eier, Käse, Pilze;
- eine Umhüllung (2), die mindestens ein Blatt (4, 5) aufweist, welches aus einem Teig erhalten wird, der mindestens Mehl und mindestens einen wasserhaltigen Bestandteil enthält; wobei die Umhüllung (2) umfasst
- zwei miteinander verbundene Seitenklappen (6, 7);
- zwei mittlere Abschnitte (8, 9), von denen mindestens einer abgerundet ist, um eine Aufnahme für die Füllungsdosis (3) zu definieren; und
- mindestens eine Rippe (10), die sich entlang mindestens eines Teils des abgerundeten Mittelteils (8) erstreckt.

2. Lebensmittelartikel nach Anspruch 1, wobei die Rippe (10) aus zwei einander gegenüberliegenden Umhüllungsabschnitten (11) besteht, die zwischen sich eine Falte (12) bilden.

3. Lebensmittelartikel nach Anspruch 2, wobei die Umhüllungsabschnitte (11) eine Falte (12) bilden, die einen spitzen Winkel definiert.

4. Lebensmittelartikel nach Anspruch 2 oder 3, wobei jeder Umhüllungsabschnitt (11) mit dem verbleibenden Teil des mittleren Abschnitts (8) eine weitere Falte (13) bildet.

5. Lebensmittelartikel nach einer der vorstehenden Ansprüche, wobei die Rippe (10) an eine der Seitenklappen (6, 7) angrenzt.

6. Lebensmittelartikel nach einer der vorstehenden Ansprüche, wobei die Umhüllung (2) aus zwei Blättern (4, 5) besteht, die miteinander entlang entsprechender Seitenlaschen (6, 7) verbunden sind, die den gesamten Umfang des Lebensmittelartikels (1) definieren.

7. Lebensmittelartikel nach einem der vorstehenden Ansprüche, wobei die Umhüllung (2) eine Vielzahl von Rippen (10) aufweist.

8. Vorrichtung zur Herstellung eines gefüllten Teigwaren-Lebensmittelartikels gemäß einem der vorstehenden Ansprüche, wobei die Vorrichtung eine Formgebungsform (14) mit einer Fläche (15) und eine Öffnung (16) in der Fläche (15) umfasst, die so konfiguriert ist, dass sie den abgerundeten mittleren Abschnitt (8) aufnimmt, wobei die Öffnung (16) seitlich durch geneigte Flächen (18) und durch Einschnitte (19) begrenzt ist, die sich von der Fläche (15) entlang mindestens eines Teils der geneigten Flächen (18) erstrecken und so konfiguriert sind, dass sie die Rippen (10) formen.

9. Vorrichtung nach Anspruch 8, wobei die Fläche (15) einen vorstehenden Teil (17) angrenzend an die Öffnung (16) aufweist, der so konfiguriert ist, dass er einen Druck ausübt, wenn die Seitenlaschen (6, 7) zum Anhaften gebracht werden, so dass die Seitenlaschen aneinander haften.

10. Vorrichtung nach Anspruch 8 oder 9, bei der die geneigten Flächen (18) konvergieren, wenn die Tiefe der Öffnung (16) zunimmt; die Tiefe der Schnitte (19) nimmt ab, wenn die Tiefe der Öffnung (16) zunimmt.

11. Verfahren zur Herstellung eines Lebensmittelartikels gemäß einem der Ansprüche von 1 bis 7, wobei das Verfahren die folgenden Schritte umfasst
- Bereitstellen einer Füllungsdosis (3), die mindestens eine der folgenden Zutaten umfasst: Fleisch, Gemüse, Fisch, Eier, Käse, Pilze;
- Umhüllung der Füllungsdosis mit einer Umhüllung (2), die mindestens ein Blatt (4, 5) aufweist, welches aus einem Teig erhalten wird, der mindestens Mehl und mindestens eine wasserhaltige Komponente enthält;
- Zusammenfügen zweier Seitenklappen (6, 7) der Umhüllung (2) miteinander;
- Formen mindestens eines abgerundeten mittleren Abschnitts (8), um eine Aufnahme für die Füllungsdosis (3) zu definieren; und
- Formen mindestens einer Rippe (10), die sich entlang mindestens eines Abschnitts des abgerundeten mittleren Abschnitts (8) erstreckt.

12. Verfahren nach Anspruch 11, wobei die Schritte des Zusammenfügens der Seitenklappen (6, 7) und des Formens des abgerundeten mittleren Abschnitts (8) und der Rippe (10) im Wesentlichen gleichzeitig mittels einer Formgebungsform (14) durchgeführt werden.

## Revendications

1. Un produit alimentaire à base de pâtes farcies, le produit alimentaire (1) comprenant :
- une dose de farce (3) comprenant au moins un des ingrédients suivants : viande, légumes, poisson, œufs, fromage, champignons ;
- un emballage (2) muni d'au moins une feuille (4, 5) obtenue à partir d'une pâte comprenant au moins de la farine et au moins un composant contenant de l'eau ; l'emballage (2) comprenant :
- deux rabats latéraux (6, 7) reliés entre eux ;
- deux parties centrales (8, 9) dont au moins une est arrondie de manière à définir un logement pour la dose de farce (3) ; et
- au moins une nervure (10), qui s'étend le long d'au moins une partie de la partie centrale arrondie (8).

2. Produit alimentaire selon la revendication 1, dans lequel la nervure (10) consiste en deux portions enveloppantes (11) se faisant face et formant un pli (12) entre elles.

3. Produit alimentaire selon la revendication 2, dans laquelle lesdites portions enveloppantes (11) forment un pli (12) définissant un angle aigu.

4. Produit alimentaire selon la revendication 2 ou 3, dans lequel chaque portion enveloppante (11) forme un autre pli (13) avec la partie restante de la portion centrale (8).

5. Produit alimentaire selon l'une des revendications précédentes, dans laquelle ladite nervure (10) est adjacente à l'un des rabats latéraux (6, 7).

6. Produit alimentaire selon l'une quelconque des allégations précédentes, dans laquelle l'enveloppe (2) comprend deux feuilles (4, 5) jointes l'une à l'autre le long des rabats latéraux (6, 7) respectifs, qui définissent le périmètre entier du produit alimentaire (1).

7. Produit alimentaire selon l'une des allégations précédentes, dans laquelle l'enveloppe (2) comprend une pluralité de nervures (10).

8. Appareil pour produire une denrée alimentaire à base de pâtes farcies selon l'une quelconque des revendications précédentes, l'appareil comprenant un moule de formage (14) comprenant une face (15) ; et une ouverture (16) dans la face (15) configurée pour loger la partie centrale arrondie (8), dans laquelle l'ouverture (16) est délimitée latéralement par des faces inclinées (18) et par des découpes (19), qui s'étendent à partir de la face (15) le long d'au moins une partie des faces inclinées (18) et sont configurées pour former les nervures (10).

9. Appareil selon la revendication 8, dans lequel la face (15) a une partie saillante (17), adjacente à l'ouverture (16), qui est configurée pour exercer une pression lorsque les rabats latéraux (6, 7) sont amenés à adhérer, de sorte que les rabats latéraux adhèrent les uns aux autres.

10. Appareil selon la revendication 8 ou 9, dans lequel les faces inclinées (18) convergent lorsque la profondeur de l'ouverture (16) augmente ; la profondeur des entailles (19) diminue lorsque la profondeur de l'ouverture (16) augmente.

11. Procédé de production d'un produit alimentaire selon l'une quelconque des revendications de 1 à 7, le procédé comprenant les étapes de :
- fourniture d'une dose de farce (3) comprenant au moins un des ingrédients suivants : viande, légumes, poisson, œufs, fromage, champignons ;
- enveloppement de la dose de farce avec un emballage (2) muni d'au moins une feuille (4, 5) obtenue à partir d'une pâte comprenant au moins de la farine et au moins un composant contenant de l'eau ;
- jonction de deux rabats latéraux (6, 7) de l'enveloppe (2) l'un à l'autre ;
- mise en forme d'au moins une partie centrale arrondie (8) de manière à définir un logement pour la dose de farce (3) ; et
- mise en forme d'au moins une nervure (10), qui s'étend le long d'au moins une partie de la partie centrale arrondie (8).

12. Procédé selon la revendication 11, dans lequel les étapes de jonction des volets latéraux (6, 7) et de mise en forme de la partie centrale arrondie (8) et de la nervure (10) sont réalisées sensiblement simultanément au moyen d'un moule de formage (14).
